Europäisches Patentamt

European Patent Office

Office européen des brevets

(19)

(11) Publication number: **0 320 161**

**A1**

# EUROPEAN PATENT APPLICATION

(12)

(21) Application number: 88311284.9

(22) Date of filing: 29.11.88

(51) Int. Cl.4: **C01B 9/04 , C01G 43/10 , C01G 31/04 , C01G 39/04 , C01G 47/00 , C01F 17/00 , C01G 1/06**

---

The title of the invention has been amended (Guidelines for Examination in the EPO, A-III, 7.3).

(30) Priority: **10.12.87 GB 8728883**

(43) Date of publication of application:
**14.06.89 Bulletin 89/24**

(84) Designated Contracting States:
**AT BE CH DE ES FR GB GR IT LI LU NL SE**

(71) Applicant: **IMPERIAL CHEMICAL INDUSTRIES PLC**
**Imperial Chemical House Millbank**
**London SW1P 3JF(GB)**

(72) Inventor: **Ryan, Thomas Anthony**
**Udine Quarry Lane**
**Kelsall Cheshire CW6 OPD(GB)**
Inventor: **Seddon, Kenneth Richard**
**Upper St. Mary's Mead Broadhill Ockley Lane**
**Keymer West Sussex(GB)**
Inventor: **Parkington, Michael John**
**7 Broadstone Drive**
**Spital Wirral Merseyside L63 9HZ(GB)**

(74) Representative: **Stephenson, Kenneth et al**
**Imperial Chemical Industries PLC Legal**
**Department: Patents PO Box 6 Bessemer**
**Road**
**Welwyn Garden City Herts, AL7 1HD(GB)**

---

(54) Preparation of a metal bromide or oxide bromide.

(57) A method for preparing a metal bromide or oxide bromide by reacting a metal oxide with carbonyl dibromide at an elevated temperature.

EP 0 320 161 A1

## CHEMICAL PROCESS

This invention relates to a chemical process and more particularly to a method for the preparation of metal bromides and oxide bromides.

Although many convenient and versatile methods are known for the preparation of metal chlorides and oxide chlorides, there are no general and convenient synthetic routes to their bromide analogues. This is especially so in the case of the d- and f-block transition metal bromides and oxide bromides; apart from the direct reaction of the metals with elemental bromine or hydrogen bromide at elevated temperatures, the known routes either require severe experimental conditions or yield impure products, the contaminants often being extremely difficult to remove.

It has now been found that metal bromides or oxide bromides can be prepared by reacting the metal oxide with carbonyl dibromide under relatively mild conditions. The reaction between uranium(VI) oxide and carbonyl dibromide has already been reported by Prigent (Compt. Rend., 1954,239,424)as a method of making uranium(V) bromide but later workers (Lux et al, Chem. Ber., 1970, 103, 2807) were unable to substantiate Prigent's claim.

Thus, according to the invention, there is provided a method for the preparation of a metal bromide or oxide bromide which comprises reacting a metal oxide with carbonyl dibromide at an elevated temperature.

The method of the invention is particularly useful for preparing transition metal bromides and oxide bromides from the corresponding oxides.

The term "transition metal" as used herein includes

( a) the main transition elements or d-block elements (atomic numbers 21-30, 39-48 and 72-80 inclusive),

(b) the lanthanide elements (atomic numbers 57-71 inclusive), and

(c) the actinide elements (atomic numbers 89-103).

The products obtained from some metal oxides are the corresponding bromides and from others the oxide bromides are obtained. The product to be obtained from any given metal can readily be ascertained by trial, and selected by optimising the reaction conditions.

The reaction between the metal oxide and the carbonyl dibromide may be performed in a suitable pressure vessel at temperatures which are preferably in excess of $100^{\circ}$C, for example above $120^{\circ}$C, and typically about $125^{\circ}$C. An excess of carbonyl dibromide is suitably employed, for example 7 moles or more per mole of metal oxide.

The invention is illustrated but not limited by the following Examples.

### Example 1

$COBr_2$ (0.9 g; 4.84 mmol) was condensed into a Carius tube containing $UO_3$ (0.18 g; 0.63 mmol), which was then sealed in vacuo, and heated at $125^{\circ}$ C for 10 days. After this time, the Carius tube was cooled to $-95^{\circ}$ C, and the top (which had been carefully scored with a glass knife) fitted with "Portex" tubing (which was attached to a ground glass joint). The Carius tube was then connected to the high-vacuum line, opened carefully, and after removal of the excess of $COBr^2$, isolated, removed from the high-vacuum line, and taken into an inert atmosphere dry-box where the contents were transferred into a Schlenk tube. The black powder was subsequently identified as $UOBr_3$ by bromide analysis (Found: Br, 50.05. Calc. for $Br_3OU$: Br, 48.9%), magnetic measurements ($\chi g = 3.235 \times 10^{-6}$ cgs; $\mu_{eff}$ (298 K) = 2.04 $u_B$), and i.r. spectroscopy. Yield (based on $UO_3$), 0.28 g (90%).

### Example 2

Reaction of $COBr_2$ (0.95 g; 5.05 mmol) and $Sm_2O^3$ (0.23 g; 0.66 mmol) at $125^{\circ}$ C for 10 days gave a pale-yellow powder which was shown to be $SmBr_3$ by bromide analysis (Found: Br, 61.1. Calc. for $Br_3Sm$: Br, 61.45%), magnetic measurements ($\chi g = 2.62 \times 10^{-6}$ cgs; $\mu_{eff}$ (294 K) = 1.64 $u_B$), and i.r. spectroscopy. Yield (based on $Sm_2O_3$), 0.47 g (92%).

### Example 3

Reaction of $COBr_2$ (0.91 g; 4.84 mmol) and $Re_2O_7$ (0.31 g;0.65 mmol) at $125^{\circ}$ C for 10 days gave a deep blue-black solid which was shown to be $ReOBr_4$ by bromide analysis (Found: Br, 60.3. Calc. for $Br_4ORe$: Br, 61.25%), magnetic measurements ($\chi g = 2.05 \times 10^{-6}$ cgs; $\mu_{eff}$ (296 K) = 1.71 $u_B$), i.r. spectroscopy, and mass spectrometry. Yield (based on $Re_2O_7$), 0.59 g (88%).

### Example 4

Reaction of $COBr_2$ (1.03 g; 5.48 mmol) and

$MoO_2$ (0.09 g; 0.70 mmol) at 125°C for 10 days gave purple-brown crystals which were shown to be $MoO_2Br_2$ by bromide analysis (Found: Br, 56.4. Calc. for $Br_2O_2Mo$: Br, 55.5%), magnetic measurements ($\chi g$ = -3.1 x $10^{-6}$ c gs) i.r. spectroscopy, and mass spectrometry. Yield (based) on $MoO_2$), 0.18 g (87%).

Example 5

Reaction of $COBr_2$ (0.98 g; 5.21 mmol) and $V_2O_5$ (0.13 g; 0.71 mmol) at 125°C for 10 days gave olive-brown leaflets which were shown to be $VOBr_2$ by bromide analysis (Found: Br, 69.7. Calc. for $Br_2OV$: Br, 70.5%), magnetic measurements ($\chi g$ = 4.25 x $10^{-6}$ cgs; $\mu_{eff}$ (293 K) = 1.57 $u_B$), i.r. spectroscopy, and mass spectrometry. Yield (based on $V_2O_5$), 0.30 g (92%).

**Claims**

1. A method for the preparation of a metal bromide or oxide bromide which comprises reacting a metal oxide with carbonyl dibromide at an elevated temperature.

2. A method according to claim 1 wherein the metal is a transition metal having an atomic number in one of the ranges 21-30, 39-48 or 72-80 inclusive.

3. A method according to claim 2 wherein the metal is vanadium, molybdenum or rhenium.

4. A method according to claim 1 wherein the metal is a lanthanide having an atomic number of from 57 to 71 inclusive.

5. A method according to claim 4 wherein the metal is samarium.

6. A method according to any preceding claim wherein the reaction is performed at a temperature in excess of 100°C.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A- 794 518 (HORIZON TITANIUM)<br>* Page 6, lines 12-29 *<br>--- | 1-3,6 | C 01 B 9/04<br>C 01 G 43/10<br>C 01 G 31/04 |
| X,D | COMPTES RENDUS HEBDOMADAIRES DES SEANCES DE L'ACADEMIE DES SCIENCES, vol. 239, 26th July 1954, pages 424-426, Gauthier-Villars, Montreuil, FR; J. PRIGENT: "Préparation du pentabromure d'uranium"<br>* Page 426, paragraph 3 *<br>----- | 1,2,4,6 | C 01 G 39/04<br>C 01 G 47/00<br>C 01 F 17/00<br>C 01 G 1/06 |

TECHNICAL FIELDS
SEARCHED (Int. Cl.4)

C 01 B
C 01 F
C 01 G

The present search report has been drawn up for all claims

| Place of search | Date of completion of the search | Examiner |
|---|---|---|
| THE HAGUE | 13-03-1989 | VAN BELLINGEN I.C.A. |

EPO FORM 1503 03.82 (P0401)